# EUROPEAN PATENT APPLICATION

(11) **EP 4 528 223 A1**
(43) Date of publication of application: **26.03.2025**
(21) Application number: 24192612.0
(22) Date of filing: 02.08.2024
(51) Int. Cl.: G01C 21/26, G06T 7/70, G06V 10/00, G01C 21/20, B62D 65/00, G05D 1/00

(54) **VEHICLE POSITIONING APPARATUS, VEHICLE POSITIONING METHOD, AND VEHICLE**

(30) Priority: 22.09.2023 JP 2023158166
(71) Applicant: TOYOTA JIDOSHA KABUSHIKI KAISHA, Aichi-ken, 471-8571 (JP)
(72) Inventor: HATANO, Yasuyoshi, Toyota-shi, 471-8571 (JP); IWAHORI, Kento, Toyota-shi, 471-8571 (JP)
(74) Representative: J A Kemp LLP

(57) **Abstract**

A vehicle positioning apparatus comprises a wheel information acquisition unit configured to acquire wheel information from a wheel detector that measures the wheel information, the wheel information being at least either an image of at least one wheel of a plurality of wheels provided with a vehicle capable of running by unmanned driving or three-dimensional point cloud data about the at least one wheel. The vehicle positioning apparatus comprises a wheel position acquisition unit configured to acquire the position of the at least one wheel using the acquired wheel information; and a position estimation unit configured to estimate the position and direction of the vehicle using the acquired position of the at least one wheel.

## Description

### CROSS REFERENCE TO RELATED APPLICATIONS

The present application claims priority from Japanese patent application No. 2023-158166 filed on September 22, 2023, the disclosure of which is hereby incorporated in its entirety by reference into the present application for all purposes.

### BACKGROUND

The present disclosure relates to a vehicle positioning apparatus, a vehicle positioning method, and a vehicle.

There is a known vehicle positioning system that measures the position of a vehicle in an image capturing area on the basis of an entire shape of the vehicle, etc. in image data obtained by image capturing by an external camera.

According to the conventional technique, if the entire shape of the vehicle has a non-dominant feature or the entire shape of the vehicle changes for the reason that the vehicle is being manufactured, for example, a detection method differing between vehicle shapes might be used in detecting the position of the vehicle. This induces a desire for a technique allowing the position of the vehicle to be detected using a detection method common to any vehicle shape.

### SUMMARY

The present disclosure is feasible in the following aspects.
(1) According to one aspect of the present disclosure, a vehicle positioning apparatus is provided. The vehicle positioning apparatus comprises: a wheel information acquisition unit configured to acquire wheel information from a wheel detector that measures the wheel information, the wheel information being at least either an image of at least one wheel of a plurality of wheels provided with a vehicle capable of running by unmanned driving or three-dimensional point cloud data about the at least one wheel; a wheel position acquisition unit configured to acquire the position of the at least one wheel using the acquired wheel information; and a position estimation unit configured to estimate the position and direction of the vehicle using the acquired position of the at least one wheel.
   According to the vehicle positioning apparatus of this aspect, it is possible to estimate the position and direction of the vehicle using the position of the wheel. This allows detection of the position of the vehicle independently of the shape of the vehicle.
(2) The vehicle positioning apparatus of the above-described aspect may further comprise a tire angle acquisition unit configured to acquire the tire angle of a front wheel of the plurality of wheels from a tire angle sensor of the vehicle. If the wheel information acquisition unit acquires the wheel information about the front wheel from the wheel detector, the wheel position acquisition unit may acquire the position and direction of the front wheel using the acquired wheel information about the front wheel. The position estimation unit may estimate the position of the vehicle and the direction of the vehicle using the acquired position, direction, and tire angle of the front wheel.
   According to the vehicle positioning apparatus of this aspect, it is possible to estimate the position and direction of the vehicle using the wheel information about only one wheel.
(3) In the vehicle positioning apparatus of the above-described aspect, if the wheel information acquisition unit acquires the wheel information including a combination of diagonal corners that is either a combination of a left front wheel and a right rear wheel or a combination of a right front wheel and a left rear wheel among a right front wheel, a left front wheel, a right rear wheel, and a left rear wheel each provided with the vehicle, the wheel position acquisition unit may acquire the positions of the wheels at the diagonal corners using the acquired wheel information including the combination of the diagonal corners. The position estimation unit may estimate the position of the vehicle and the direction of the vehicle using the acquired positions of the wheels at the diagonal corners.
   According to the vehicle positioning apparatus of this aspect, using the wheel information about the wheels in a positional relationship forming the combination of the diagonal corners makes it possible to suppress accuracy reduction in detecting the position and direction of the vehicle, compared to a case not including a combination of diagonal corners.
(4) In the vehicle positioning apparatus of the above-described aspect, if the wheel information acquisition unit acquires the wheel information about two or more of the wheels provided with the vehicle, the wheel position acquisition unit may acquire the positions of the two or more wheels. The position estimation unit may estimate the position and direction of the vehicle using reference data set in advance , the reference data representing relationship between the position and direction of the vehicle and a positional relationship of the acquired positions of the two or more wheels.
   According to the vehicle positioning apparatus of this aspect, using the reference data makes it possible to reduce processing cost involved in estimation of the position and direction of the vehicle, compared to a case of calculating the position and direction of the vehicle using the position of the wheel.
(5) The vehicle positioning apparatus of the above-described aspect may further comprise an identification information acquisition unit configured to acquire identification information about the vehicle. The position estimation unit may estimate the position and direction of the vehicle using the reference data representing relationship between the position and direction of the vehicle corresponding to the identification information and the positional relationship of the acquired positions of the two or more wheels, the used reference data.
   According to the vehicle positioning apparatus of this aspect, even if a positional relationship of the wheels differs between vehicle types or specifications, it is still possible to use the reference data suitable for each vehicle type or specification. This allows the position and direction of the vehicle to be estimated with improved accuracy.
(6) In the vehicle positioning apparatus of the above-described aspect, the wheel information acquisition unit may further acquire positional relationship information representing at least either a positional relationship between the vehicle and the at least one wheel or a positional relationship between the wheel detector and the at least one wheel. The wheel position acquisition unit may determine whether the at least one wheel is a front wheel or a rear wheel using the acquired positional relationship information together with the acquired wheel information.
(7) According to another aspect of the present disclosure, a vehicle capable of running by unmanned driving is provided. The vehicle comprises: a plurality of wheels; a wheel information acquisition unit configured to acquire wheel information from a wheel detector that measures the wheel information, the wheel information being at least either an image of at least one wheel of the plurality of wheels or three-dimensional point cloud data about the at least one wheel; a wheel position acquisition unit configured to acquire the position of the at least one wheel using the acquired wheel information; and a position estimation unit configured to estimate the position and direction of the vehicle using the acquired position of the at least one wheel.

According to the vehicle of this aspect, it is possible for the vehicle to estimate the position and direction of the vehicle by itself using the position of the wheel.

The present disclosure is also feasible in various aspects other than the vehicle positioning apparatus and the vehicle. For example, the present disclosure may be realized in aspects including a remote controller, a remote control system, a vehicle positioning method, a method of manufacturing a vehicle, a method of controlling a remote controller, a method of controlling a remote control system, a computer program realizing such control methods, and a non-transitory recording medium storing such a computer program.

### BRIEF DESCRIPTION OF THE DRAWINGS

Fig. 1 is an explanatory view showing a schematic configuration of a remote control system;
Fig. 2 is a flowchart showing a processing routine of a vehicle positioning method according to a first embodiment;
Fig. 3 is an explanatory view showing a method of estimating the position and direction of a vehicle implemented by a remote controller according to the first embodiment;
Fig. 4 is a flowchart showing a method of causing the vehicle to run implemented by the remote controller;
Fig. 5 is an explanatory view schematically showing the method of causing the vehicle to run by remote control;
Fig. 6 is a block diagram showing an internal functional configuration of a remote controller according to a second embodiment;
Fig. 7 is a flowchart showing a processing routine of a vehicle positioning method according to the second embodiment;
Fig. 8 is an explanatory view showing a method of estimating the position and direction of a vehicle implemented if the position of a rear wheel is acquired;
Fig. 9 is an explanatory view showing a method of estimating the position and direction of the vehicle implemented if the position of a front wheel is acquired;
Fig. 10 is a block diagram showing a functional configuration of a vehicle according to a third embodiment; and
Fig. 11 is a flowchart showing a method of causing the vehicle to run according to the third embodiment.

### DETAILED DESCRIPTION

### A. First Embodiment

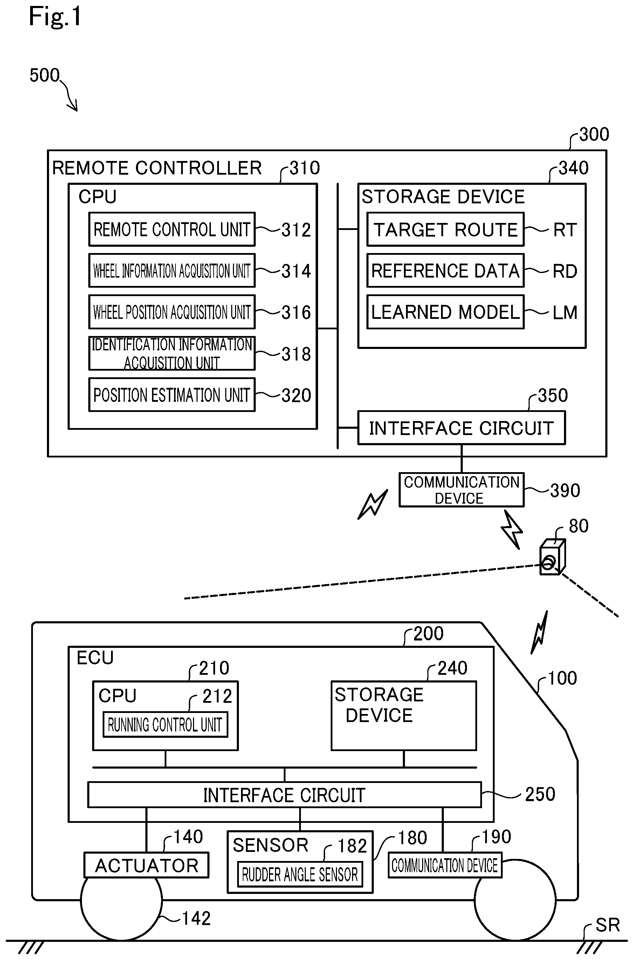

Fig. 1 is an explanatory view showing a schematic configuration of a remote control system 500 including a remote controller 300 as a vehicle positioning apparatus according to a first embodiment of the present disclosure. The remote control system 500 allows a vehicle 100 to run by remote control along a predetermined running route. For example, the remote control system 500 is used in a factory for manufacture of the vehicle 100 capable of running by remote control. Meanwhile, the remote control system 500 is applicable not only to the factory but also to any place where the vehicle 100 is capable of running.

The vehicle 100 is a passenger car, a truck, a bus, or a vehicle for construction, or others, for example. In the present embodiment, the vehicle 100 is a battery electric vehicle (BEV) capable of running by unmanned driving. The "unmanned driving" means driving independent of driving operation by a passenger. The driving operation means operation relating to at least any of "run," "turn," and "stop" of a vehicle. The unmanned driving is realized by automatic or manual remote control using a device provided outside the vehicle. A passenger not involved in the driving operation may be on-board the vehicle running by the unmanned driving. The passenger not involved in the driving operation includes a person simply sitting in a seat of the vehicle and a person doing work such as assembly, inspection, or operation of switches different from the driving operation while on-board the vehicle, for example. Driving through the driving operation by a passenger may be called "manned driving." The vehicle 100 includes a vehicle communication device 190, an actuator 140, a sensor 180, and an electronic control unit (ECU) 200.

The ECU 200 is mounted on the vehicle 100 and implements various types of control over the vehicle 100. The ECU 200 includes a storage device 240 such as a hard disk drive (HDD), a solid state drive (SSD), an optical recording medium, or a semiconductor memory, a CPU 210 as a central processing unit, and an interface circuit 250. The CPU 210, the storage device 240, and the interface circuit 250 are connected via an internal bus in a manner allowing bidirectional communication therebetween. The actuator 140, the sensor 180, and the vehicle communication device 190 are connected to the interface circuit 250. The vehicle communication device 190 makes radio communication with a device such as the remote controller 300 external to the vehicle 100 and connected to a network via an access point in the factory, for example.

The storage device 240 has a readable/writable region storing computer programs for realizing at least some of functions provided in the present embodiment. The CPU 210 executes each type of computer program stored in the storage device 240 to realize a function such as a running control unit 212.

The running control unit 212 implements running control over the vehicle 100. The "running control" means various types of control such as adjustments of an acceleration, a speed, and a tire angle, for example, for driving each actuator 140 to fulfill the functions of the vehicle 100 including "run," "turn," and "stop." In the present embodiment, the actuator 140 includes an actuator of a driving device for accelerating the vehicle 100, an actuator of a steering device for changing a traveling direction of the vehicle 100, and an actuator of a braking device for decelerating the vehicle 100. The driving device includes a battery, a motor for running to be driven by power from the battery, and a wheel 142 including a drive wheel to be rotated by the motor for running. In the present embodiment, the vehicle 100 has four wheels 142 including a right front wheel, a left front wheel, a right rear wheel, and a left rear wheel. Meanwhile, the vehicle 100 may not always have to have four wheels but may have two or more wheels 142 including a front wheel and a rear wheel. The actuator of the driving device includes the motor for running. The actuator 140 may further include an actuator for swinging motion of a wiper of the vehicle 100, an actuator for opening and closing a power window of the vehicle 100, etc., for example. When a driver is on-board the vehicle 100, the running control unit 212 controls the actuator 140 in response to operation by the driver, thereby allowing vehicle 100 to run. The running control unit 212 also allows the vehicle 100 to run by controlling the actuator 140 in response to a control command transmitted from the remote controller 300 independently of whether a driver is on-board the vehicle 100.

The sensor 180 includes general types of sensors used for running control over the vehicle 100. For example, the sensor 180 includes a tire angle sensor 182 for measuring the tire angle of each wheel 142. In the present specification, the "tire angle" means the tire angle of the wheel 142 that is any of the two front wheels of the vehicle 100. Meanwhile, if the positions or directions of two or more front wheels are used in estimating the position and direction of the vehicle 100, the tire angle may be an average of the tire angles of the two or more front wheels. The sensor 180 may further include an acceleration sensor for detecting an impact on the vehicle 100, etc., and a wheel speed sensor for detecting a rotation speed of the wheel 142, for example. Result of the measurement by the sensor 180 is transmitted to the ECU 200.

As shown in Fig. 1, the remote control system 500 includes the remote controller 300, and one or more wheel detectors 80. The wheel detector 80 is a unit for measuring wheel information. The "wheel information" is information used for estimating the position of the wheel 142, and is an image of the wheel 142 provided with the vehicle 100 or three-dimensional point cloud data about the wheel 142, for example. The "three-dimensional point cloud data" is data indicating the three-dimensional position of a point cloud. The wheel information may be used not only for measuring or estimating the position of the wheel 142 but also for measuring or estimating the direction of the wheel 142, the width or height of the wheel 142, the type of the wheel 142, etc. together with the position of the wheel 142. The image or three-dimensional point cloud data about the wheel 142 may not always have to represent the wheel 142 in its entirety but may represent a side surface of the wheel 142 or a part of the wheel 142 covering only a tire or a rim of the wheel 142, for example.

For example, an external camera installed at a different place from the vehicle 100 is used as the wheel detector 80. The wheel detector 80 acquires an image of the wheel 142 as the wheel information. The wheel detector 80 is communicably connected to the remote controller 300 and the vehicle 100. This allows the remote controller 300 to acquire the wheel information from the wheel detector 80.

The remote controller 300 generates a control command for causing the vehicle 100 to run automatically by remote control and transmits the control command to the vehicle 100, thereby implementing running control over the vehicle 100 by the remote control. The remote controller 300 may be configured using an information processor provided external to the vehicle 100, for example. The remote controller 300 causes the vehicle 100 to run automatically by the remote control to conduct conveyance of the vehicle 100 and others in a predetermined conveyance zone in the factory.

The remote controller 300 includes a CPU 310 as a central processing unit, a storage device 340, an interface circuit 350, and a remote communication device 390. The CPU 310, the storage device 340, and the interface circuit 350 are connected via an internal bus in a manner allowing bidirectional communication therebetween. The remote communication device 390 is connected to the interface circuit 350. The remote communication device 390 communicates with the vehicle 100 and others via the network, for example.

The storage device 340 is a RAM, a ROM, an HDD, or an SSD, for example. The storage device 340 has a readable/writable region storing a target route RT, reference data RD, and a learned model LM. The target route RT is a running route along a track SR set in advance for the vehicle 100. The learned model LM is a detection model using artificial intelligence as described later, and is a machine learning model learned to detect the wheel 142.

The reference data RD is data for estimating the position and direction of the vehicle 100. The reference data RD contains relationship between the position of the wheel 142 and the position and direction of the vehicle 100. The reference data RD is a bounding box surrounding the four wheels 142 provided at the vehicle 100, for example. The bounding box represents relationship between a positional relationship of two or more of the wheels 142 belonging to the vehicle 100 and the position and direction of the vehicle 100. Applying the bounding box to the positions of the two or more wheels 142 of the wheels 142 allows estimation of the position and direction of the vehicle 100. The reference data RD may contain information such as the direction of the wheel 142 in addition to the position of the wheel 142. If the wheel information to be used is about only one wheel 142, the bounding box is applicable in estimating the position and direction of the vehicle 100 using the position, direction, and tire angle of any one wheel 142 of the wheels 142 as described later.

In the present embodiment, the reference data RD is stored in connection with each vehicle identification information. The "vehicle identification information" means various types of information with which the vehicle 100 is individually identifiable. The vehicle identification information includes ID information given to each vehicle 100 such as a vehicle identification number (VIN), a manufacturing number of the vehicle 100 used for production management, a vehicle type/model code of the vehicle 100, and others, for example. The vehicle identification information may be used in a group defined by a unit such as a lot number or a vehicle type, for example, among which at least a positional relationship of the wheels 142 is common. With this configuration, even if a positional relationship of the wheels 142 differs between the vehicles 100, it is still possible to estimate the position and direction of the vehicle 100 with high accuracy. If the position or direction of the wheel 142 is estimable, identification information about the wheel 142 may be used instead of or in addition to the vehicle identification information in connection with the reference data RD. The "identification information about the wheel 142" is the shape of the wheel 142, the size, profile, manufacturing year or width of a tire, or the shape or size of a rim, for example. In this case, as the identification information about the wheel 142 is usable instead of the vehicle identification information, it is possible to omit a device to acquire the vehicle identification information and to extract an appropriate bounding box using only the wheel detector 80 already provided.

The storage device 340 stores a computer program for realizing at least some of the functions provided in the present embodiment. The CPU 310 executes the computer program stored in the storage device 340 to cause the CPU 310 to function as a remote control unit 312, a wheel information acquisition unit 314, a wheel position acquisition unit 316, an identification information acquisition unit 318, and a position estimation unit 320. Meanwhile, some or all of these functions may be configured using a hardware circuit.

The wheel information acquisition unit 314 acquires image data about the wheel 142 as the wheel information from the wheel detector 80. The wheel position acquisition unit 316 analyzes the acquired wheel information to acquire the position of the wheel 142 in the wheel information. The position of the wheel 142 may be acquired while a distinction is made between a front wheel and a rear wheel, between right and left, or between front, rear, right, and left. In these cases, the wheel information acquisition unit 314 acquires image data covering at least a part of the vehicle 100 together with the wheel 142, thereby acquiring at least either a positional relationship between the vehicle 100 and the wheel 142 or a positional relationship between the wheel 142 and the wheel detector 80. Information indicating at least either the positional relationship between the vehicle 100 and the wheel 142 or the positional relationship between the wheel 142 and the wheel detector 80 is also called "positional relationship information." Using the positional relationship information together with the wheel information, the wheel position acquisition unit 316 is capable of determining whether the wheel 142 at the acquired position is a front wheel, a rear wheel, on the right side, or on the left side. As an example, if a part of the vehicle 100 located at a predetermined position is acquired together with the wheel 142, it is possible to determine whether the wheel 142 is on the front, rear, right, or left side using the position of the wheel 142 relative to this part of the vehicle 100. As another example, it may be determined in advance whether the wheel 142 to be subjected to acquisition of the wheel information by the wheel detector 80 is on the front, rear, right, or left side in response to setting of the wheel detector 80 in terms of a location or an angle of view relative to a running route of the vehicle 100 such as setting for locating the wheel detector 80 in such a manner as to acquire the right front wheel of the vehicle 100, for example. The identification information acquisition unit 318 acquires vehicle identification information about the vehicle 100. The position estimation unit 320 estimates the position and direction of the vehicle 100 using the acquired position of the wheel 142. In the present embodiment, the position estimation unit 320 estimates the position and direction of the vehicle 100 by applying the reference data RD to the detected positions of the two wheels 142 including the left front wheel and the right rear wheel.

The remote control unit 312 functions as a command generation unit that generates a control command for causing the vehicle 100 to make each motion and outputs the control command to the vehicle 100. The remote control unit 312 generates a control command for causing the vehicle 100 to run automatically by remote control using the estimated position and direction of the vehicle 100, and transmits the control command to the vehicle 100. This control command is a command for causing the vehicle 100 to run along the target route RT stored in the storage device 340, for example. The control command may be generated as a command including driving force or braking force, and a tire angle. If the vehicle 100 receives a request for remote control, the running control unit 212 of the ECU 200 implements running control. As a result, the vehicle 100 runs automatically.

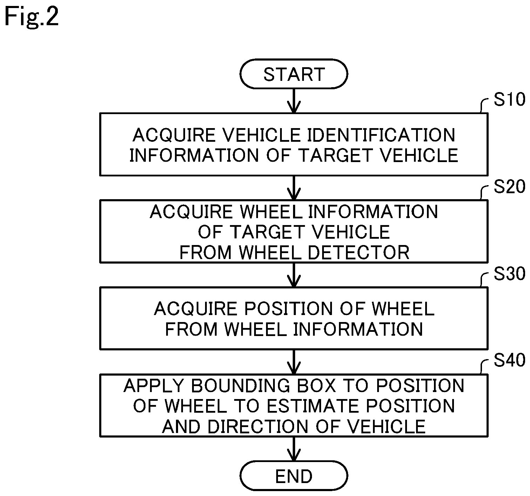

Fig. 2 is a flowchart showing a processing routine of a vehicle positioning method implemented by the remote controller 300 according to the first embodiment. This flow is started in response to start of running of the vehicle 100 by remote control, for example. This flow is implemented repeatedly at a predetermined time interval such as 0.1 seconds, for example.

In step S10, the identification information acquisition unit 318 acquires vehicle identification information about the vehicle 100 as a target of remote control. The vehicle identification information may be obtained from a reader having acquired the vehicle identification information via a short-range radio communication from a radio frequency-identification (RF-ID) tag given to the vehicle 100 having arrived at a running start position, for example. The vehicle identification information may be acquired by reading a two-dimensional code given to the vehicle 100 using a camera, for example. The identification information acquisition unit 318 may acquire the vehicle identification information about the vehicle 100 as a target of remote control from a step management device or a production management device, for example, and may check the acquired vehicle identification information against the vehicle identification information acquired from the RF-ID tag or the like. In step S20, the wheel information acquisition unit 314 acquires image data about the wheel 142 as the wheel information from the wheel detector 80.

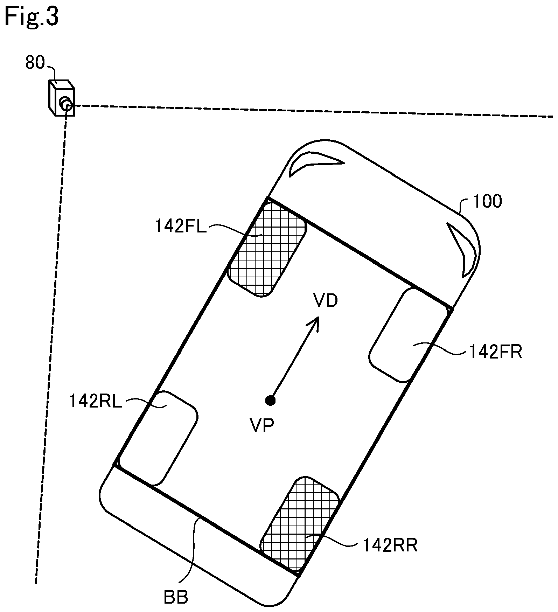

Fig. 3 is an explanatory view showing a method of estimating the position and direction of the vehicle 100 implemented by the remote controller 300 according to the first embodiment. Fig. 3 schematically shows the vehicle 100 in a plan view, a bounding box BB contained in the reference data RD corresponding to the vehicle identification information about the vehicle 100, and a position VP of the vehicle 100 and a direction VD of the vehicle 100 associated with the bounding box BB. The following description will be given by referring to Fig. 3, as appropriate, together with Fig. 2.

As shown in Fig. 3, in the present embodiment, the wheel information acquisition unit 314 acquires image data from an external camera as the wheel detector 80 that is about the two wheels 142 including a left front wheel 142FL and a right rear wheel 142RR in a positional relationship forming a combination of diagonal corners of the four wheels 142 belonging to the vehicle 100. To facilitate understanding of the technique, the wheels 142 as detection targets are illustrated with hatches. As compared with a case where the wheel information about the four wheels 142 is acquired, defining the two wheels 142 as detection targets achieves reduction in a data volume of the wheel information to achieve reduction in calculation cost involved in the process of estimating the position and direction of the vehicle 100. Using the combination of the diagonal corners for determining the positional relationship makes it possible to improve accuracy in estimating the position of the vehicle 100 in both a vehicle width direction and a traveling direction. Thus, it is possible to suppress accuracy reduction in detecting the position and direction of the vehicle 100 to be caused by using the two wheels 142 as detection targets. The wheel information acquisition unit 314 is configured to acquire the wheel information about wheels in a positional relationship of diagonal corners may acquire the wheel information about the two wheels 142 including a right front wheel 142FR and a left rear wheel 142RL, or may acquire the wheel information about three or more wheels 142 including a combination of these diagonal corners.

In step S30, the wheel information acquisition unit 314 conducts image analysis on the image data about the wheel 142 to acquire the position of the wheel 142 in the image data. More specifically, using an outer shape of the wheel 142 detected from the image data, the wheel position acquisition unit 316 is capable of acquiring the position of the wheel 142 by calculating the coordinates of a positioning point of the wheel 142 in a local coordinate system and converting the calculated coordinates to coordinates in a global coordinate system. The position of the wheel 142 to be acquired may be set as the position of the entire wheel 142 or as the position of a part of the wheel 142 such as a center of a side surface of the wheel 142 or a barycenter, center, or end portion of the wheel 142 or that of a member forming the wheel 142, for example. The direction of the wheel 142 is estimable from the outer shape of the wheel 142, for example. The direction of the wheel 142 may be estimated using an optical flow method and on the basis of the direction of a moving vector of the wheel 142 calculated from change in position of a feature point of the wheel 142 between frames in a captured image.

It is possible to detect the outer shape of the wheel 142 in the image data by inputting the image data to the learned model LM. The learned model LM is a learned machine learning model learned so as to realize either semantic segmentation or instance segmentation, for example. For example, a convolution neural network (hereinafter called CNN) learned through supervised learning using a learning dataset is applicable as this machine learning model. The learning dataset contains a plurality of training images including the wheel 142, and a correct answer label showing whether each region in the training image is a region representing the wheel 142 or a region representing a subject other than the wheel 142, for example. During learning using the CNN, a parameter for the CNN is preferably updated through backpropagation in such a manner as to reduce error between output result obtained by the detection model and the correct answer label.

In step S40, the position estimation unit 320 estimates the position VP and the direction VD of the vehicle 100 using the position of the wheel 142 acquired by the wheel position acquisition unit 316. As shown in Fig. 3, the position estimation unit 320 estimates the position VP and the direction VD of the vehicle 100 by applying the bounding box BB to the detected positions of the two wheels 142 including the left front wheel 142FL and the right rear wheel 142RR. In the illustration in Fig. 3, the bounding box BB is applied in conformity with the outer shape of the wheel 142. Compared to a case of calculating the position of the vehicle 100, using the bounding box BB makes it possible to reduce processing cost involved in estimation of the position and direction of the vehicle 100. In the present embodiment, the position estimation unit 320 estimates the position and direction of the vehicle 100 using the reference data RD corresponding to the acquired vehicle identification information. In this configuration, even if a positional relationship of the wheels 142 differs between vehicle types or specifications, it is still possible to use the reference data RD suitable for each vehicle type or specification. This allows the position and direction of the vehicle 100 to be estimated with improved accuracy.

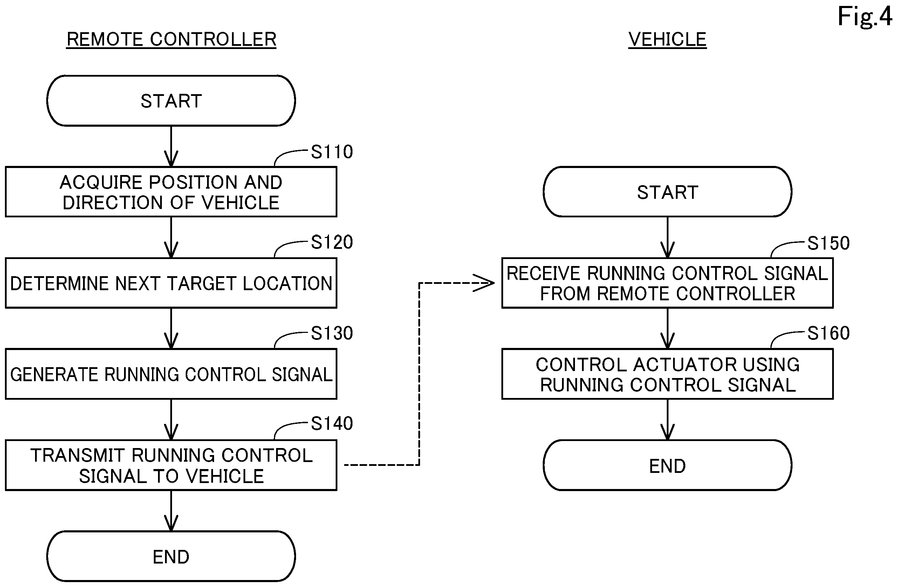

Fig. 4 is a flowchart showing a method of causing the vehicle 100 to run implemented by the remote controller 300. The remote control unit 312 acquires result of the estimation about the position and direction of the vehicle 100 obtained by the position estimation unit 320 (step S110). In the present embodiment, the position of the vehicle 100 includes X, Y, and Z coordinates in the global coordinate system of the factory. The position of the wheel detector 80 is adjusted in advance. The remote control unit 312 detects the position of the vehicle 100 using the wheel information acquired from the wheel detector 80, and acquires the position of the vehicle 100 in the factory using the detected position of the vehicle 100.

The remote control unit 312 determines a target location to which the vehicle 100 is to move next (step S120). In the present embodiment, the target location is expressed by X, Y, and Z coordinates in the global coordinate system of the factory. The storage device 340 of the remote controller 300 contains the target route RT stored in advance as a route along which the vehicle 100 is to run. The target route RT is expressed by a node indicating a departure place, a node indicating a way point, a node indicating a destination, and a link connecting the nodes to each other. The remote control unit 312 determines the target location to which the vehicle 100 is to move next using the position of the vehicle 100 and the target route RT. The remote control unit 312 determines the target location on the target route RT ahead of a current position of the vehicle 100.

The remote control unit 312 generates a running control signal for causing the vehicle 100 to run toward the determined target location (step S130). In the present embodiment, the running control signal includes an acceleration and a steering angle of the vehicle 100 as parameters. The remote control unit 312 calculates a running speed of the vehicle 100 from transition of the position of the vehicle 100, and makes comparison between the calculated running speed and a target speed of the vehicle 100 set in advance. If the running speed is lower than the target speed, the remote control unit 312 determines an acceleration in such a manner as to accelerate the vehicle 100. If the running speed is higher than the target speed, the remote control unit 312 determines an acceleration in such a manner as to decelerate the vehicle 100. If the vehicle 100 is on the target route RT, the remote control unit 312 determines a steering angle in such a manner as to prevent the vehicle 100 from deviating from the target route RT. If the vehicle 100 is not on the target route RT, in other words, if the vehicle 100 deviates from the target route RT, the remote control unit 312 determines a steering angle in such a manner as to return the vehicle 100 to the target route RT.

The remote control unit 312 transmits the generated running control signal to the vehicle 100 (step S140). The remote control unit 312 repeats acquisition of the position of the vehicle 100, determination of a target location, generation of a running control signal, transmission of the running control signal, and others in a predetermined cycle.

The running control unit 212 of the vehicle 100 receives the running control signal from the remote control unit 312 (step S150), and controls the actuator 140 using the received running control signal, thereby causing the vehicle 100 to run at the acceleration and the steering angle indicated by the running control signal (step S160). The running control unit 212 repeats reception of a running control signal and control over the actuator 140 in a predetermined cycle. By causing the vehicle 100 to run by remote control as described above, it becomes possible to move the vehicle 100 without using a conveyance unit such as a crane or a conveyor.

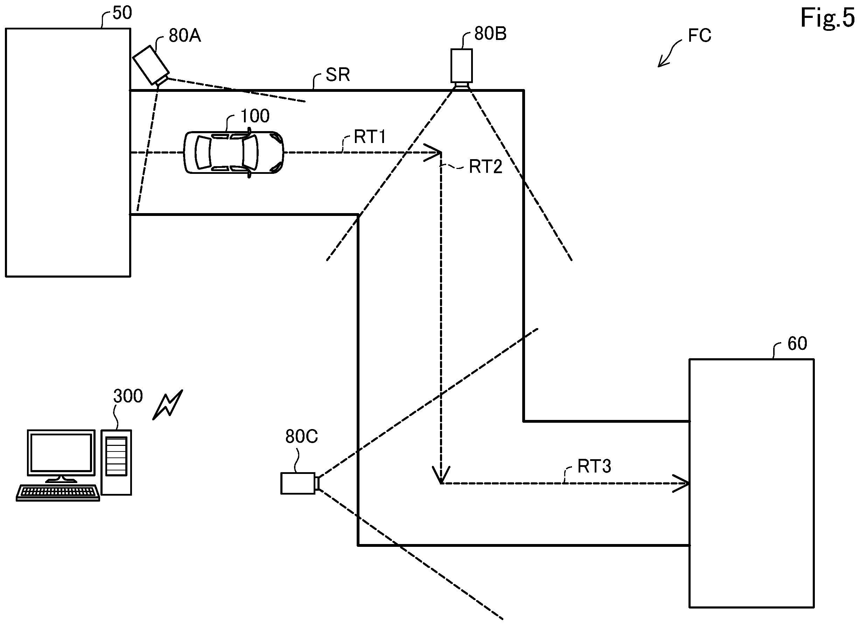

Fig. 5 is an explanatory view schematically showing the method of causing the vehicle 100 to run by remote control. The method of causing the vehicle 100 to run shown in Fig. 5 is implemented by remote control by the remote controller 300 in a factory FC for manufacture of the vehicle 100. The factory FC has a first step 50 as a pre-step and a second step 60 as a post-step. The first step 50 and the second step 60 are connected to each other via the track SR along which the vehicle 100 is capable of running.

The remote controller 300 causes the vehicle 100 to run along the target route RT while estimating the position and direction of the vehicle 100 at a predetermined time interval using the wheel information acquired by the wheel detector 80. In the illustration in Fig. 5, the target route RT set along the track SR includes a target route RT1, a target route RT2, and a target route RT3 continuous with each other. A plurality of the wheel detectors 80 is installed around the track SR. These wheel detectors 80 include a wheel detector 80A, a wheel detector 80B, and a wheel detector 80C corresponding to the target routes RT1, RT2, and RT3 respectively.

The remote controller 300 estimates the position and direction of the vehicle 100 while making a switch between the wheel detectors 80 as appropriate in response to the position of the vehicle 100, and causes the vehicle 100 to run along the target route RT. In the illustration in Fig. 5, the vehicle 100 having started the first step 50 runs along the target route RT1 by remote control using image data acquired by the wheel detector 80A. When the vehicle 100 arrives at the target route RT2, the wheel detector 80A is switched to the wheel detector 80B suitable for detecting the vehicle 100 running along the target route RT2. Likewise, when the vehicle 100 arrives at the target route RT3, the wheel detector 80B is switched to the wheel detector 80C suitable for detecting the vehicle 100 and the vehicle 100 arrives at the second step 60 as a destination.

As described above, the remote controller 300 of the present embodiment is capable of estimating the position and direction of the vehicle 100 using the position of the wheel 142. This allows the position of the vehicle 100 to be detected with the shape of the vehicle 100 in any case such as a case where the shape of the vehicle 100 has a non-dominant feature, a case where the shape of the vehicle 100 changes for the reason that the vehicle 100 is being manufactured, or a case where the vehicle 100 is configured as a platform.

According to the remote controller 300 of the present embodiment, the wheel information acquisition unit 314 acquires the wheel information including a combination of diagonal corners of the right front wheel, the left front wheel, the right rear wheel, and the left rear wheel each belonging to the vehicle 100. The wheel position acquisition unit 316 acquires the positions of the wheels 142 at the diagonal corners using the acquired wheel information including the combination of the diagonal corners. The position estimation unit 320 estimates the position of the vehicle 100 and the direction of the vehicle 100 using the acquired positions of the wheels 142 at the diagonal corners. Using the positions of the wheels 142 in a positional relationship forming the combination of the diagonal corners improves accuracy in estimating the position of the vehicle 100 in both a vehicle width direction and a traveling direction. Thus, it is possible to suppress accuracy reduction in detecting the position and direction of the vehicle 100 to be caused by using both the right and left wheels 142 as detection targets.

According to the remote controller 300 of the present embodiment, the position estimation unit 320 estimates the position and direction of the vehicle 100 using the bounding box BB as the reference data RD set in advance representing relationship between a positional relationship of the acquired positions of the two or more wheels 142 and the position and direction of the vehicle 100. Compared to a case of calculating the position of the vehicle 100 using the position of the wheel 142, using the bounding box BB makes it possible to reduce processing cost involved in estimation of the position and direction of the vehicle 100.

The remote controller 300 of the present embodiment further includes the identification information acquisition unit 318 that acquires identification information about the vehicle 100. The position estimation unit 320 estimates the position and direction of the vehicle 100 using the reference data RD representing relationship between the position and direction of the vehicle 100 corresponding to the identification information and a positional relationship of the acquired positions of two or more of the wheels 142. By using the reference data RD corresponding to the vehicle identification information about the vehicle 100, even if a positional relationship of the wheels 142 differs between vehicle types or specifications, it still becomes possible to use the reference data RD suitable for each vehicle type or specification. This allows the position and direction of the vehicle 100 to be estimated with improved accuracy.

### B. Second Embodiment

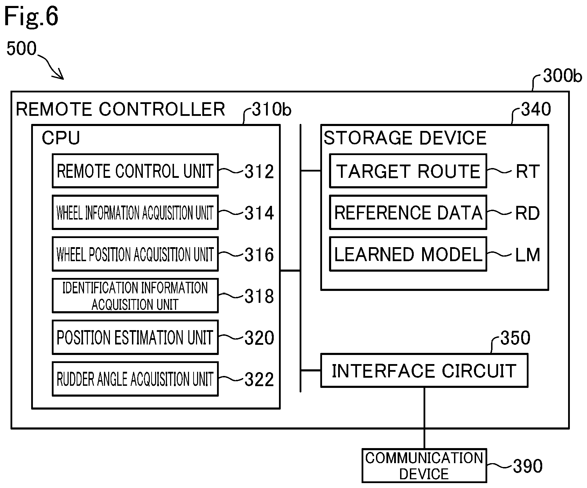

Fig. 6 is a block diagram showing an internal functional configuration of a remote controller 300b according to a second embodiment. The remote controller 300b differs from the remote controller 300 of the first embodiment in that it includes a CPU 310b further functioning as a tire angle acquisition unit 322, and is the same as the remote controller 300 in the other configuration. The tire angle acquisition unit 322 acquires the tire angle of a front wheel from the tire angle sensor 182. The remote controller 300b of the present embodiment estimates the position and direction of the vehicle 100 using wheel information about any one wheel 142 of the four wheels 142 belonging to the vehicle 100.

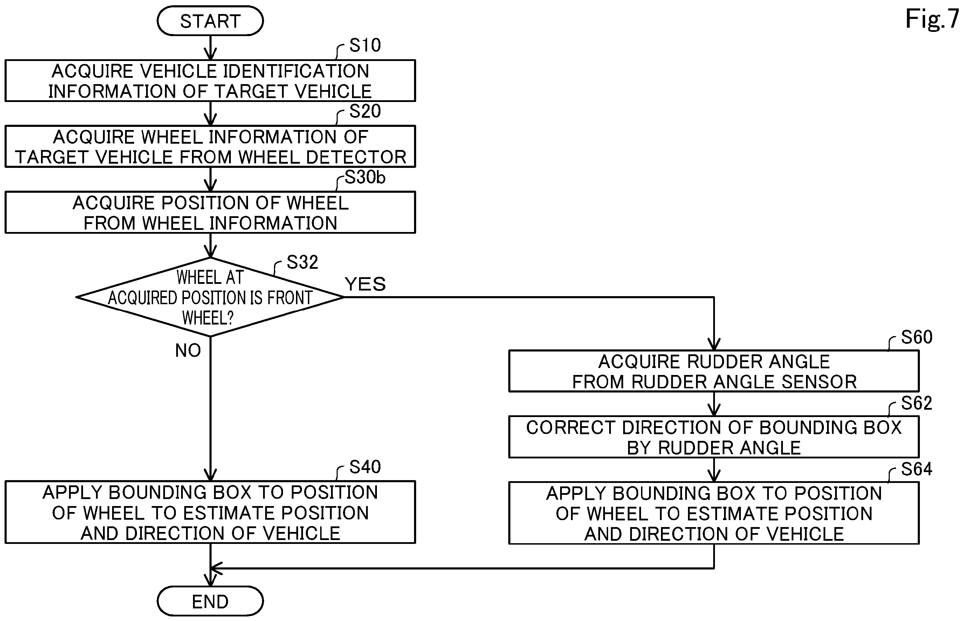

Fig. 7 is a flowchart showing a processing routine of a vehicle positioning method implemented by the remote controller 300b according to the second embodiment. This flow differs from the processing routine performed by the remote controller 300 shown in the first embodiment in that it includes step S30b instead of step S30, includes step S32 between step S30b and step S40, and includes steps from step S60 to step S64.

In step S30b, the wheel information acquisition unit 314 conducts image analysis on image data about the wheel 142 to acquire the position of any one wheel 142 of the four wheels 142 belonging to the vehicle 100 from the image data. For example, the wheel information acquisition unit 314 acquires the position of the wheel 142 assumed to have the highest accuracy in detection of the wheel 142 or assumed to have the highest probability of being the wheel 142 in object recognition. In step S32, the wheel position acquisition unit 316 determines whether the target wheel 142 at a position acquired by the wheel information acquisition unit 314 is a front wheel. If the wheel 142 at the acquired position is a rear wheel (S32: NO), the wheel position acquisition unit 316 moves to step S40. In step S30b, the wheel 142 as a target of acquisition of a position may be set to only one of the front wheels. In this case, steps S32 and S40 become omissible.

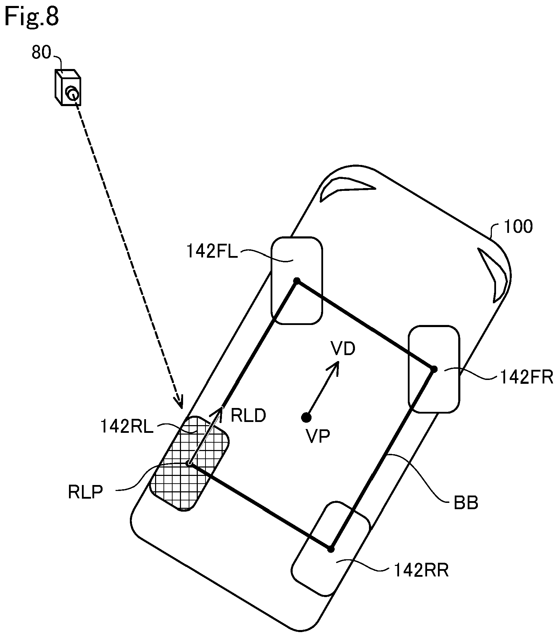

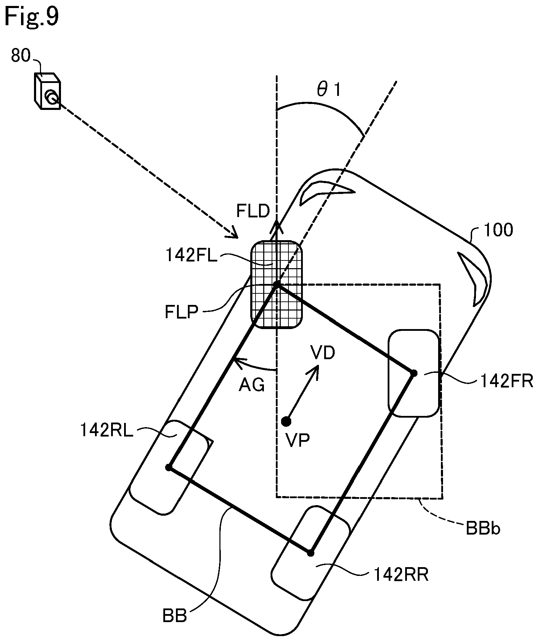

Fig. 8 is an explanatory view showing a method of estimating the position and direction of the vehicle 100 implemented if the position of a rear wheel is acquired. If one rear wheel is used, the wheel position acquisition unit 316 acquires the position and direction of this rear wheel. In the illustration in Fig. 8, a position RLP and a direction RLD of a left rear wheel 142RL are acquired. As shown in Fig. 8, the position estimation unit 320 locates the bounding box BB in conformity with the position RLP and the direction RLD of the left rear wheel 142RL. In Fig. 8 and Fig. 9 referred to later, the bounding box BB is applied in conformity with a center position of the wheel 142. The position estimation unit 320 estimates a position VP and a direction VD of the vehicle 100, for example, by locating one corner of the bounding box BB at the position RLP and making conformity between the direction VD of the vehicle 100 represented by the bounding box BB and the direction RLD of the left rear wheel 142RL. In this case, a tire angle is not used in estimating the position VP and the direction VD of the vehicle 100.

In step S32, if the wheel 142 at the acquired position is a front wheel (S32: YES), the wheel position acquisition unit 316 moves to step S60. In step S60, the tire angle acquisition unit 322 acquires the tire angle of the front wheel from the tire angle sensor 182. In step S62, the position estimation unit 320 applies the bounding box BB to the position of the front wheel and corrects the direction of the bounding box BB. In step S64, the position estimation unit 320 estimates the position and direction of the vehicle 100 on the basis of the corrected bounding box BB.

Fig. 9 is an explanatory view showing a method of estimating the position and direction of the vehicle 100 implemented if the position of a front wheel is acquired. If one front wheel is used, the wheel position acquisition unit 316 acquires the position and direction of this front wheel. In the illustration in Fig. 9, a position FLP and a direction FLD of a left front wheel 142FL are acquired. A tire angle θ1 is acquired from the tire angle sensor 182. As indicated by dashed lines BBb in Fig. 9, the position estimation unit 320 locates the bounding box BBb in conformity with the position FLP and the direction FLD of the left front wheel 142FL. For example, the position estimation unit 320 locates one corner of the bounding box BBb at the position FLP and makes conformity between the direction of the vehicle 100 represented by the bounding box BBb and the direction FLD of the left front wheel 142FL. As indicated by an arrow AG, the position estimation unit 320 makes correction of rotating the bounding box BBb by the acquired tire angle θ1, and estimates the position VP and the direction VD of the vehicle 100 using the corrected bounding box BB.

As described above, according to the remote controller 300b of the present embodiment, the position estimation unit 320 estimates the position and direction of the vehicle 100 using the acquired position, direction, and tire angle of a front wheel. Thus, it is possible to estimate the position and direction of the vehicle 100 using the wheel information about only one wheel 142.

### C. Third Embodiment

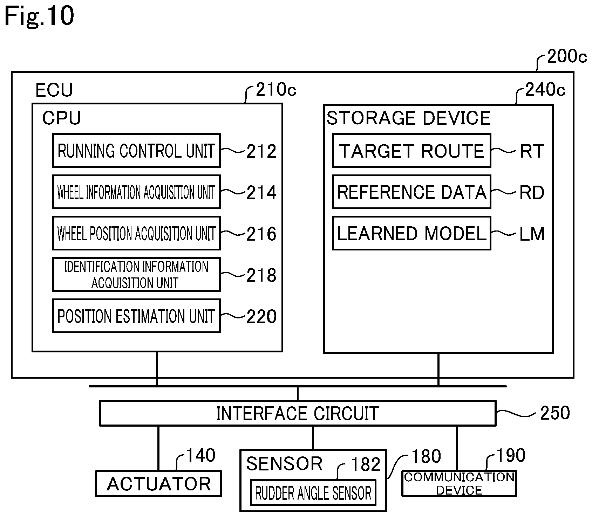

Fig. 10 is a block diagram showing a functional configuration of a vehicle 100 according to a third embodiment. In the present embodiment, a remote control system 500 differs from that of the first embodiment in that it does not include the remote controller 300. More specifically, the third embodiment differs from the first embodiment in that an ECU 200c provided at the vehicle 100 shown in Fig. 10 has a function as a vehicle positioning apparatus instead of the remote controller 300. Unless specifically stated, the remote control system 500 is the same as that of the first embodiment in the other configuration.

The ECU 200c differs from the ECU 200 described in the first embodiment in that it includes a CPU 210c instead of the CPU 210 and includes a storage device 240c instead of the storage device 240. In addition to the program for realizing the function of the running control unit 212 described in the first embodiment, the storage device 240c stores programs for realizing functions corresponding to the wheel information acquisition unit 314, the wheel position acquisition unit 316, the identification information acquisition unit 318, and the position estimation unit 320 provided at the remote controller 300 according to the first embodiment. As a result, the CPU 210c further becomes functional as a wheel information acquisition unit 214, a wheel position acquisition unit 216, an identification information acquisition unit 218, and a position estimation unit 220 corresponding to these functions. The storage device 240c further stores the target route RT, the reference data RD, and the learned model LM stored in the storage device 340 of the remote controller 300 described in the first embodiment. According to the vehicle 100 configured in this way, the provision of the vehicle positioning apparatus at the vehicle 100 allows the vehicle 100 to achieve effect by itself comparable to that of the first embodiment without using a device such as the remote controller 300 different from the vehicle 100.

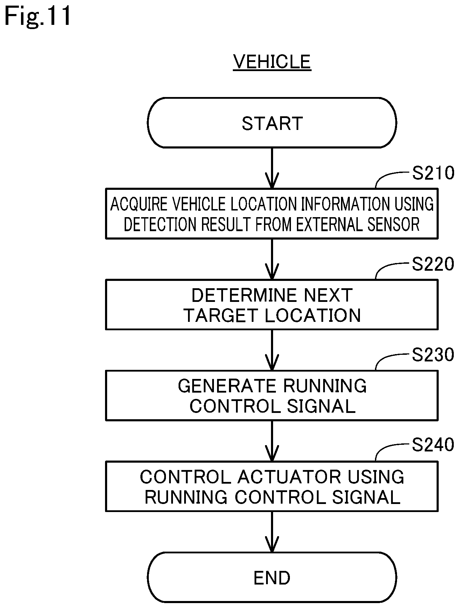

Fig. 11 is a flowchart showing a method of causing the vehicle 100 to run according to the present embodiment. The position estimation unit 220 acquires the position or direction of the vehicle 100 using wheel information output from the wheel detector 80 (step S210). The running control unit 212 determines a target location to which the vehicle 100 is to move next (step S220). In the present embodiment, the storage device 240c of the ECU 200c contains the target route RT stored in advance. The running control unit 212 generates a running control signal for causing the vehicle 100 to run toward the determined target location (step S230). The running control unit 212 controls the actuator 140 using the generated running control signal, thereby causing the vehicle 100 to run at an acceleration and a steering angle indicated by the running control signal (step S240). The running control unit 212 repeats acquisition of the position or direction of the vehicle 100, determination of a target location, generation of a running control signal, control over the actuator 140, and others in a predetermined cycle. According to the vehicle 100 of the present embodiment, it is possible for the vehicle 100 to run autonomously without controlling the vehicle 100 remotely using the remote controller 300.

### D. Other Embodiments

(D1) In the example shown in each of the above-described embodiments, the wheel detector 80 is an external camera. Meanwhile, a radar unit such as a light detection and ranging (LiDAR) unit may be used instead of or together with the external camera. The LiDAR unit measures three-dimensional point cloud data about the vehicle 100 as the wheel information. Using the LiDAR unit allows acquisition of highly accurate three-dimensional point cloud data. In this case, the wheel position acquisition unit 316 estimates the position and direction of the wheel 142 in the acquired three-dimensional point cloud data. More specifically, the wheel position acquisition unit 316 is capable of estimating the position and direction of the wheel 142 in the three-dimensional point cloud data with high accuracy by conducting template matching with the three-dimensional point cloud data using wheel point cloud data stored in advance in the storage device 340. For example, three-dimensional CAD data about the wheel 142 is applicable to the wheel point cloud data as a template. The wheel point cloud data may contain information for specifying the direction of the wheel 142. The template matching with the three-dimensional point cloud data using the wheel point cloud data may be conducted by employing an iterative closest point (ICP) algorithm or a normal distribution transform (NDT) algorithm, for example. If it is possible to estimate the position of the wheel 142 from the three-dimensional point cloud data with high accuracy, the template matching may not have to be conducted.

(D2) In the example shown in the above-described first embodiment, the position estimation unit 320 estimates the position and direction of the vehicle 100 by applying the reference data RD to the detected positions of the two wheels 142 including the left front wheel and the right rear wheel. Meanwhile, the position estimation unit 320 may estimate the position and direction of the vehicle 100 using the positions of the wheels 142 in a positional relationship forming a combination other than that of diagonal corners such as the right front wheel and the right rear wheel, for example. Alternatively, the position estimation unit 320 may estimate the position and direction of the vehicle 100 using the positions of three or more wheels 142. In this case, it is possible to further improve accuracy in estimating the position of the vehicle 100. In another case, the position estimation unit 320 may estimate the position of the vehicle 100 using the detected positions of two or more wheels 142 without using the reference data RD. For example, it is possible to estimate a midpoint between the position of the left front wheel and the position of the right rear wheel to be the position of the vehicle 100. In another case, the position estimation unit 320 may estimate the direction of the vehicle 100 using a positional relationship of the detected positions of two or more wheels 142. For example, it is possible to estimate a line connecting the right front wheel and the right rear wheel to be the direction of the vehicle 100.

(D3) In each of above-described embodiments, a passenger car, a truck, a bus, a vehicle for construction, and others are shown as examples of the vehicle 100. However, the vehicle 100 is not limited to these but may be a vehicle to run with a wheel or may be a vehicle to run with a caterpillar track, and may be a two-wheel vehicle, a four-wheel vehicle, or a combat vehicle, for example. The vehicle includes a battery electric vehicle (BEV), a gasoline automobile, a hybrid automobile, and a fuel cell automobile.

(D4) The vehicle 100 is simply required to have a configuration movable by remote control. The vehicle 100 may be embodied as a platform having the following configuration, for example. More specifically, the vehicle 100 is simply required to have a configuration for fulfilling functions including "run," "turn," and "stop" by remote control. Specifically, the "vehicle 100 movable by remote control" may not have to be equipped with at least some of interior components such as a driver's seat and a dashboard, may not have to be equipped with at least some of exterior components such as a bumper and a fender, or may not have to be equipped with a bodyshell. In such cases, a remaining component such as a bodyshell may be mounted on the vehicle 100 before the vehicle 100 is shipped from a factory, or a remaining component such as a bodyshell may be mounted on the vehicle 100 after the vehicle 100 is shipped from a factory while the remaining component such as a bodyshell is not mounted on the vehicle 100. Each of components may be mounted on the vehicle 100 from any direction such as from above, from below, from the front, from the rear, from the right, or from the left. These components may be mounted from the same direction or from respective different directions. The embodiment as a platform might also be subjected to position determination in the same way as the vehicle 100 of the first embodiment.

(D5) The vehicle 100 may be manufactured by an arbitrary manufacturing method. For example, the vehicle 100 may be manufactured by combining a plurality of modules. The module means a unit composed of a plurality of components assembled according to a part or function of the vehicle 100. For example, a platform of the vehicle 100 may be manufactured by combining a front module constituting a front part of the platform, a center module constituting a center part of the platform, and a rear module constituting a rear part of the platform. The number of the modules constituting the platform is not limited to three but may be equal to or less than two, or equal to or greater than four. In addition to or instead of components constituting the platform, a component of the vehicle 100 to constitute a part different from the platform may be modularized. Each module may include an arbitrary exterior component such as a bumper or a grill, or an arbitrary interior component such as a seat or a console. Not only the vehicle 100 but also a moving object of an arbitrary type may be manufactured by combining a plurality of modules. Such a module may be manufactured by joining a plurality of components by welding or using a fixture, for example, or may be manufactured by forming at least some of components to constitute the module integrally as a single component by casting. A process of forming a single component, particularly a relatively large-sized component integrally is also called Giga-casting or Mega-casting. The front module, the center module, or the rear module described above may be manufactured using Giga-casting, for example.

(D6) In the example shown in the above-described first embodiment, the remote controller 300 performs the process from acquisition of the position and direction of the vehicle 100 to generation of a running control signal. Meanwhile, the vehicle 100 may perform at least part of the process from acquisition of the position and direction of the vehicle 100 to generation of a running control signal. For example, embodiments (1) to (3) described below are applicable.
(1) The remote controller 300 may acquire the position and the orientation of the vehicle 100, determine the target location to which the vehicle 100 is supposed to go next, and generate a route from the current location of the vehicle 100 shown by the acquired position to the target location. The remote controller 300 may generate a route to a target location between the current location and the destination, or may generate a route to the destination. The remote controller 300 may transmit the generated route to the vehicle 100. The vehicle 100 may generate a running control signal so that the vehicle 100 runs on the route received from the remote controller 300 and control the actuator 140 using the generated running control signal.
(2) The remote controller 300 may acquire the position and the orientation of the vehicle 100 and transmit the acquired position and orientation to the vehicle 100. The vehicle 100 may determine the target location to which the vehicle 100 is supposed to go next, generate a route from the current location of the vehicle 100 shown by the received position to the target location, generate a running control signal so that the vehicle 100 runs on the generated route, and control the actuator 140 using the generated running control signal.
(3) In the embodiments (1) and (2) above, the vehicle 100 may be equipped with an internal sensor, and detection results output from the internal sensor may be used for at least one of the generation of the route and the generation of the running control signal. Examples of the internal sensor may include, for example, camera, LiDAR, millimeter wave radar, ultrasonic sensor, GPS sensor, acceleration sensor, gyro sensor, and the like. For example, in the embodiment (1) described above, the remote controller 300 may acquire the detection result of the internal sensor, and reflect the detection result of the internal sensor to the route when the route is generated. In the embodiment (1) described above, the vehicle 100 may acquire the detection result of the internal sensor, and reflect the detection result of the internal sensor to the running control signal when the running control signal is generated. In the embodiment (2) described above, the vehicle 100 may acquire the detection result of the internal sensor, and reflect the detection result of the internal sensor to the route when the route is generated. In the embodiment (2) described above, the vehicle 100 may acquire the detection result of the internal sensor, and reflect the detection result of the internal sensor to the running control signal when the running control signal is generated.

(D7) In the third embodiment, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(D8) In the above-described first embodiment, the remote controller 300 automatically generates a running control signal to be transmitted to the vehicle 100. By contrast, the remote controller 300 may generate a running control signal to be transmitted to the vehicle 100 in response to operation by an external operator existing outside the vehicle 100. For example, the external operator may operate an operating device including a display on which a captured image output from the vehicle detector 80 is displayed, steering, an accelerator pedal, and a brake pedal for operating the vehicle 100 remotely, and a communication device for making communication with the remote controller 300 through wire communication or wireless communication, for example, and the remote controller 300 may generate a running control signal responsive to the operation on the operating device.

(D9) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

The present disclosure is not limited to the embodiments described above and is able to be realized with various configurations without departing from the spirit thereof. For example, technical features in the embodiments corresponding to the technical features in the aspects described in the section of SUMMARY are able to be replaced with each other or combined together as necessary in order to solve part or the whole of the problems described above or to achieve part or the whole of the effects described above. When the technical features are not described as essential features in the present specification, they are able to be deleted as necessary.

## Claims

1. A vehicle positioning apparatus (300) comprising:
a wheel information acquisition unit (314) configured to acquire wheel information from a wheel detector (80) that measures the wheel information, the wheel information being at least either an image of at least one wheel (142) of a plurality of wheels provided with a vehicle (100) capable of running by unmanned driving or three-dimensional point cloud data about the at least one wheel;
a wheel position acquisition unit (316) configured to acquire the position of the at least one wheel using the acquired wheel information; and
a position estimation unit (320) configured to estimate the position and direction of the vehicle using the acquired position of the at least one wheel.

2. The vehicle positioning apparatus according to claim 1, further comprising:
a tire angle acquisition unit (322) configured to acquire a tire angle of a front wheel of the plurality of wheels from a tire angle sensor of the vehicle, wherein
if the wheel information acquisition unit acquires the wheel information about the front wheel from the wheel detector,
the wheel position acquisition unit acquires the position and direction of the front wheel using the acquired wheel information about the front wheel, and
the position estimation unit estimates the position of the vehicle and the direction of the vehicle using the acquired position, direction, and tire angle of the front wheel.

3. The vehicle positioning apparatus according to claim 1, wherein
if the wheel information acquisition unit acquires the wheel information including a combination of diagonal corners that is either a combination of a left front wheel and a right rear wheel or a combination of a right front wheel and a left rear wheel among a right front wheel, a left front wheel, a right rear wheel, and a left rear wheel each provided with the vehicle,
the wheel position acquisition unit acquires the positions of the wheels at the diagonal corners using the acquired wheel information including the combination of the diagonal corners, and
the position estimation unit estimates the position of the vehicle and the direction of the vehicle using the acquired positions of the wheels at the diagonal corners.

4. The vehicle positioning apparatus according to claim 1, wherein
if the wheel information acquisition unit acquires the wheel information about two or more of the wheels provided with the vehicle,
the wheel position acquisition unit acquires the positions of the two or more wheels, and
the position estimation unit estimates the position and direction of the vehicle using reference data set in advance, the reference data representing relationship between the position and direction of the vehicle and a positional relationship of the acquired positions of the two or more wheels.

5. The vehicle positioning apparatus according to claim 4, further comprising:
an identification information acquisition unit (318) configured to acquire identification information about the vehicle, wherein
the position estimation unit estimates the position and direction of the vehicle using the reference data (RD) representing relationship between the position and direction of the vehicle corresponding to the identification information and the positional relationship of the acquired positions of the two or more wheels.

6. The vehicle positioning apparatus according to claim 1, wherein
the wheel information acquisition unit further acquires positional relationship information representing at least either a positional relationship between the vehicle and the at least one wheel or a positional relationship between the wheel detector and the at least one wheel, and
the wheel position acquisition unit determines whether the at least one wheel is a front wheel or a rear wheel using the acquired positional relationship information together with the acquired wheel information.

7. A vehicle positioning method comprising:
acquiring wheel information that is at least either an image of at least one wheel (142) of a plurality of wheels provided with a vehicle (100) capable of running by unmanned driving or three-dimensional point cloud data about the at least one wheel;
acquiring the position of the at least one wheel using the acquired wheel information; and
estimating the position and direction of the vehicle using the acquired position of the at least one wheel.

8. A vehicle (100) capable of running by unmanned driving, comprising:
a plurality of wheels (142);
a wheel information acquisition unit (314) configured to acquire wheel information from a wheel detector (80) that measures the wheel information, the wheel information being at least either an image of at least one wheel (142) of the plurality of wheels or three-dimensional point cloud data about the at least one wheel;
a wheel position acquisition unit (316) configured to acquire the position of the at least one wheel using the acquired wheel information; and
a position estimation unit (320) configured to estimate the position and direction of the vehicle using the acquired position of the at least one wheel.
